# FASCICULE DE BREVET EUROPEEN

(11) **EP 3 706 576 B1**
(45) Date de publication et mention de la délivrance du brevet: **08.12.2021**
(21) Numéro de dépôt: 18807112.0
(22) Date de dépôt: 05.11.2018
(51) Int. Cl.: A21B 1/52, A47J 37/01, A47J 37/06, A21B 3/13

(54) **APPAREIL DE CUISSON POUR PREPARATIONS PATISSIERES**
KOCHGERÄT FÜR BACKMISCHUNGEN
COOKING APPLIANCE FOR BAKING MIXES

(30) Priorité: 08.11.2017 FR 1760504
(43) Date de publication de la demande: 16.09.2020
(73) Titulaire: SEB S.A., 69130 Ecully (FR)
(72) Inventeur: VOLATIER, Sébastien, 21000 Dijon (FR); BLONDEL, Mathilde, 24700 Louviers (FR)
(74) Mandataire: SEB Développement
(86) Numéro de dépôt international: PCT/FR2018/052722
(87) Numéro de publication internationale: WO 2019/092346

(56) Documents cités:
- EP-A1- 0 696 430
- WO-A1-2015/082574
- US-A1- 2006 272 511

## Description

La présente invention concerne de manière générale un appareil de cuisson et en particulier un appareil de cuisson ménager pour cuire des préparations culinaires, telles que des gâteaux. Le produit décrit est un appareil de cuisson qui permet de réaliser, avec des programmes préenregistrés et un programme manuel, des gâteaux, biscuits, meringues, tartes. Il permet également de réaliser une étape de fonte de chocolat ou de beurre pouvant être nécessaire pour certaines préparations pâtissières.

Il est connu dans l'art antérieur le document EP0696430 qui décrit un appareil multifonction qui intègre un plat creux qui permet de réaliser diverses préparations. L'appareil comprend des résistances électriques chauffantes et nécessite une quantité importante d'énergie pour chauffer les aliments à cuire. Ce défaut est aggravé avec une préparation pâtissière, car une grande quantité de pâte est à chauffer, ce qui accentue le besoin d'énergie électrique. De plus, les résistances électriques sont embarquées sur une pièce mobile, ce qui procure une structure complexe au niveau de l'alimentation électrique, avec aussi un risque accru de défaillance des résistances électriques, car les rendre mobiles conduit à des chocs, ce qui peut endommager ces pièces.

Les documents WO 2015/082574 A1 et US 2006/272511 A1 sont également pertinents par rapport à la présente invention.

Un but de la présente invention est de répondre aux inconvénients de l'art antérieur mentionnés ci-dessus et en particulier, tout d'abord, de proposer un appareil de cuisson pour préparations pâtissières qui présente une capacité à recevoir des préparations dans un moule interchangeable, tout en garantissant une cuisson homogène.

Pour cela un premier aspect de l'invention concerne un appareil de cuisson pour préparations pâtissières comprenant une embase et un couvercle articulé sur l'embase entre une première position relevée pour l'introduction d'une préparation pâtissière et une deuxième position abaissée pour former un boitier de cuisson de la préparation pâtissière, le couvercle et l'embase comprenant chacun une portion du boîtier de cuisson et des moyens de chauffage ancrés sur la portion du boîtier de cuisson respective, l'appareil de cuisson comprenant des moyens de positionnement et de maintien agencés pour positionner et maintenir un moule amovible, tel qu'un moule en silicone, dans une enceinte de cuisson formée à l'intérieur du boîtier de cuisson lorsque le couvercle est dans la deuxième position abaissée, ledit appareil de cuisson étant caractérisé en ce que l'embase comprend :
- une sole de cuisson montée mobile par rapport à la portion de boîtier de cuisson de l'embase pour contacter une paroi inférieure du moule amovible, et agencée entre la paroi inférieure du moule amovible reçu dans l'espace de cuisson et les moyens de chauffage de l'embase,
- des moyens de rappel élastiques, agencés pour repousser la sole de cuisson contre la paroi inférieure du moule amovible.

L'appareil de cuisson selon la mise en œuvre ci-dessus comprend une sole mobile et des moyens de rappel élastiques qui repoussent la sole de cuisson contre la paroi inférieure du moule, si bien que la chaleur est bien distribuée par la sole de cuisson qui forme un écran et un répartiteur entre les moyens de chauffage et le moule. Les points chauds sont ainsi évités et les gâteaux sont cuits de manière homogène et précise. De plus, si le moule amovible est souple ou déformable (caractéristique souvent intrinsèque d'un moule en silicone), la sole de cuisson forme un appui qui évite les déformations dues au poids de la pâte chargée dans le moule : les gâteaux ont alors un meilleur aspect et, par exemple, une épaisseur uniforme.

Avantageusement, la sole de cuisson comprend une pluralité de protubérances, agencées pour contacter la paroi inférieure du moule amovible selon des lignes ou des points de contact. Le contact entre la sole de cuisson et le moule est limité à des lignes ou des points de contact, ce qui évite de transmettre de la chaleur par conduction, afin d'éviter les points chauds.

Avantageusement, la sole de cuisson comprend une pluralité de perforations. La chaleur peut alors facilement être transmise par convection avec établissement d'un flux d'air entre les résistances et la paroi du moule.

Avantageusement, la sole de cuisson est une paroi métallique, telle qu'une paroi en aluminium.

Avantageusement, la sole de cuisson est une tôle gaufrée.

Avantageusement, le couvercle comprend une cuve interne agencée entre les moyens de chauffage et l'espace de cuisson. Une telle cuve permet de limiter le volume à chauffer, afin de nécessiter moins d'énergie et/ou de temps de chauffe.

Avantageusement, dans la deuxième position abaissée, la cuve interne du couvercle et le moule amovible reçu dans l'espace de cuisson forment une enceinte de cuisson. L'enceinte de cuisson contient alors l'espace de cuisson, avec les aliments à cuire.

Avantageusement, le couvercle et l'embase comprennent chacun un réflecteur, agencés pour former une enceinte de chauffe entourant les moyens de chauffage et l'espace de cuisson, lorsque le couvercle est dans la deuxième position abaissée. La chaleur est confinée, le volume à chauffer réduit, si bien que l'invention, pour un même volume de pâte à cuire et un encombrement extérieur similaire (l'ajout de réflecteurs ne nécessite pas beaucoup d'espace), permet de réduire notablement la quantité d'énergie requise, jusqu'à 50%, ainsi que le temps total de cuisson. L'appareil reste compact. Une telle enceinte de chauffe limite le volume total à chauffer ainsi que les pertes de chaleur vers le boîtier et l'extérieur de l'appareil de cuisson.

Avantageusement, dans la deuxième position abaissée, le réflecteur du couvercle et le réflecteur de l'embase forment une enceinte de chauffe fermée. L'enceinte de chauffe est alors un espace clos, dans la deuxième position du couvercle bien sûr, ce qui permet de limiter les pertes d'énergie par convection par exemple. Bien entendu, dans le domaine des appareils domestiques de cuisson, un tel espace clos peut présenter quelques ouvertures ou espacements entre les réflecteurs, de l'ordre de quelques dixièmes de millimètre ou même jusqu'à un ou deux millimètres.

Avantageusement, les moyens de chauffage du couvercle sont agencés entre la cuve interne du couvercle et le réflecteur du couvercle.

Avantageusement, les moyens de chauffage de l'embase sont agencés entre la sole de cuisson et le réflecteur de l'embase

Avantageusement, dans la deuxième position abaissée, l'enceinte de chauffe présente un volume inférieur à 5.5 litres. Un tel volume limité permet de réduire le temps de cuisson et la quantité d'énergie.

Avantageusement, le réflecteur du couvercle et/ou de l'embase est métallique.

Avantageusement, les moyens de chauffage sont des résistances chauffantes, autrement appelées résistances électriques.

Avantageusement, le couvercle est articulé sur l'embase selon une liaison pivot agencée sur une partie arrière de l'appareil, l'appareil comprenant des poignées latérales et une interface de commande sur une partie avant de l'appareil, l'appareil comprenant en outre au moins un évent agencé pour évacuer de la vapeur d'eau depuis l'enceinte de cuisson vers l'extérieur du boîtier de cuisson, en partie arrière de l'appareil de cuisson. Lors de la cuisson d'un gâteau, une grande quantité d'eau doit être évacuée sous forme de vapeur d'eau, et l'invention prévoit un évent qui évite de laisser la vapeur d'eau chauffer des zones susceptibles d'être touchées par l'utilisateur. En d'autres termes, l'évent est agencé pour évacuer de la vapeur d'eau générée lors de la cuisson ailleurs que vers l'avant (où se trouvent une poignée, une interface homme machine, et potentiellement l'utilisateur) ou les côtés de l'appareil (où se trouvent des poignées). Les parties de l'appareil que l'utilisateur touche (poignées, interface homme machine...) sont donc éloignées de l'évent et des flux de vapeur chaude.

Avantageusement, l'évent est un conduit formé par un tube avec une première extrémité donnant dans l'enceinte de cuisson, et une deuxième extrémité donnant sur l'extérieur de l'appareil de cuisson. Le tube traverse l'espace entre l'enceinte de cuisson et l'enceinte de chauffe, sans communiquer avec. La vapeur d'eau par exemple ne peut pas aller dans cet espace entre l'enceinte de cuisson et l'enceinte de chauffe, où se trouvent les moyens de chauffe, ce qui les préserve.

Avantageusement, le couvercle et/ou l'embase comprennent chacun des moyens de mesure de température.

Avantageusement, l'appareil de cuisson pour préparations pâtissières comprend des moyens de commande de cuisson agencés pour commander indépendamment la chauffe des moyens de chauffage du couvercle et la chauffe des moyens de chauffage de l'embase. Cette mise en œuvre permet d'éviter un déséquilibre de chauffe car le besoin de chaleur est dissymétrique : beaucoup de chaleur à fournir du côté inférieur (l'embase) où se trouve la pâte à chauffer, et peu de besoin en haut (le couvercle) où se trouve majoritairement de l'air.

Avantageusement, la portion de boîtier de cuisson du couvercle et de l'embase est formée par au moins un capot plastique. En d'autres termes, le boîtier externe n'est pas le réflecteur : ce dernier se trouve entre le boîtier externe et l'enceinte de cuisson.

Avantageusement, les moyens de rappel élastiques sont un ressort ancré sur l'embase, et la sole de cuisson est attachée au ressort. La sole est directement tenue et positionnée par le ressort, ce qui procure une solution fiable et économique.

Alternativement ou en addition, l'appareil de cuisson comprend des moyens de guidage, tels que des pivots coulissants, agencés pour guider la sole de cuisson.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue de face d'un appareil de cuisson pour préparations pâtissières selon l'invention, comprenant une embase et un couvercle en position fermée ou abaissée sur l'embase ;
- la figure 2 représente l'appareil de cuisson pour préparations pâtissières de la figure 1 vu de dessus ;
- la figure 3 représente l'appareil de cuisson pour préparations pâtissières de la figure 1 en perspective, avec le couvercle en position ouverte ou relevée ;
- la figure 4 représente une vue de côté en coupe de l'appareil de cuisson pour préparations pâtissières de la figure 1 ;
- la figure 5 représente un détail de la figure 4 ;
- la figure 6 représente la vue en coupe de la figure 4 en perspective ;
- la figure 7 représente une sole de cuisson qui équipe l'appareil de cuisson pour préparations pâtissières des figures précédentes.

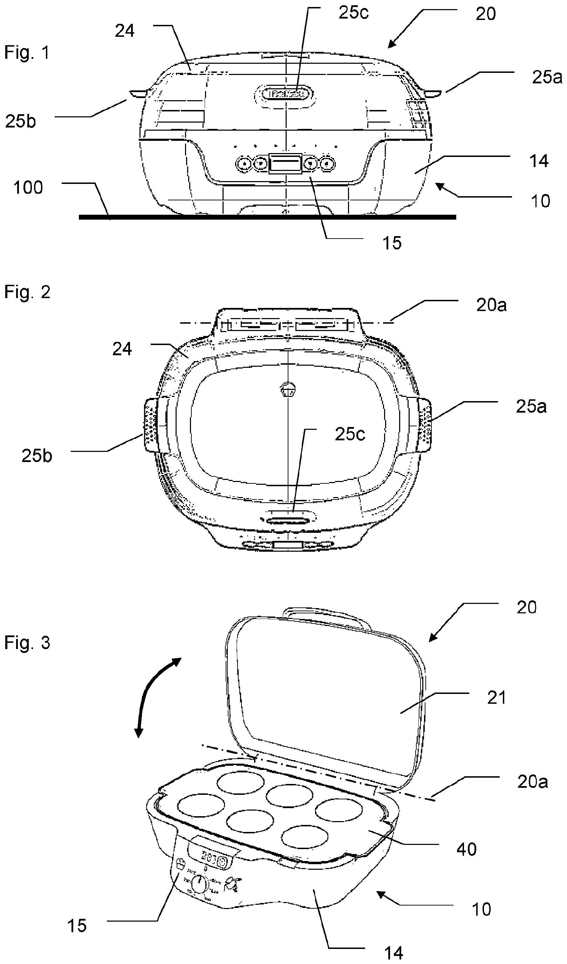

La figure 1 représente un appareil de cuisson pour préparations pâtissières reposant sur un support 100 (une table ou un plan de travail) et comprenant une embase 10 et un couvercle 20 en position abaissée ou fermée sur l'embase 10. Comme le montre la figure 3, le couvercle 20 peut également occuper une position ouverte ou relevée, pour donner accès à une enceinte de cuisson. Dans la présente demande, la position ouverte ou relevée est appelée première position relevée, et la position fermée ou abaissée est appelée deuxième position abaissée.

Pour pouvoir pivoter de la première position relevée à la deuxième position abaissée, le couvercle 20 est monté pivotant sur l'embase 10, par le biais d'une charnière située à l'arrière de l'appareil de cuisson pour préparations pâtissières, et qui définit un axe de pivotement 20a visible aux figures 2 et 3.

Comme le montrent les figures 1, 2 et 3, l'appareil de cuisson pour préparations pâtissières comprend un boîtier extérieur formé par une portion de boîtier de couvercle 24 et une portion de boîtier d'embase 14, toutes deux typiquement réalisées en matière plastique. Le couvercle 20 comprend aussi des poignées latérales 25a et 25b, et une poignée avant 25c, afin de permettre à l'utilisateur d'ouvrir et fermer aisément le couvercle 20.

L'appareil de cuisson pour préparations pâtissières est également équipé d'une interface homme machine 15 (ou d'une interface de commande) qui comprend par exemple un afficheur et des boutons de commande pour permettre à l'utilisateur de définir des cycles de cuisson et de démarrer / arrêter l'appareil de cuisson pour préparations pâtissières. Comme on le voit sur les figures 1 et 3, l'interface homme machine 15 est située sur l'embase 10, sur la face avant de l'appareil de cuisson pour préparations pâtissières.

La figure 3 représente l'appareil de cuisson pour préparations pâtissières avec le couvercle 20 en première position relevée, de sorte à rendre accessible un espace de cuisson où se trouve un moule 40 avec plusieurs empreintes, pour recevoir et faire cuire des portions de pâte à gâteau, pour préparer des petits gâteaux. Comme cela sera expliqué ci-dessous, le moule 40 est amovible pour être changé et/ou nettoyé aisément. Typiquement, le moule 40 est en matière silicone par exemple, et est souple, ou facilement déformable. Par exemple, sous le poids de la pâte chargée dans les empreintes, il est fréquent que le moule 40 se déforme de plusieurs millimètres, surtout s'il n'est tenu que par sa périphérie.

La figure 3 montre aussi une cuve interne 21 du couvercle 20, qui vient en regard du moule 40 lorsque le couvercle 20 est en deuxième position abaissée, pour fermer un espace de cuisson.

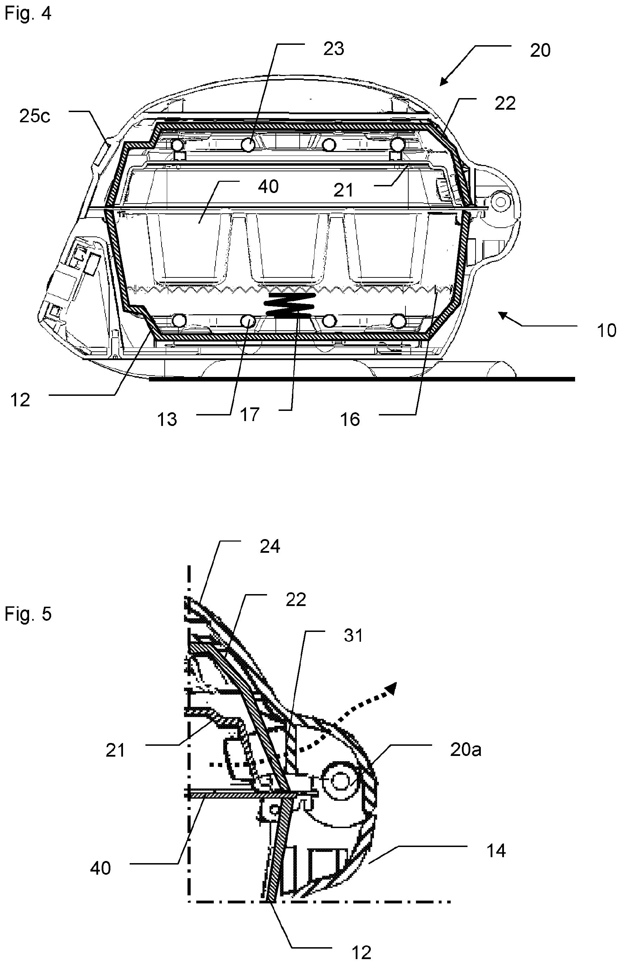

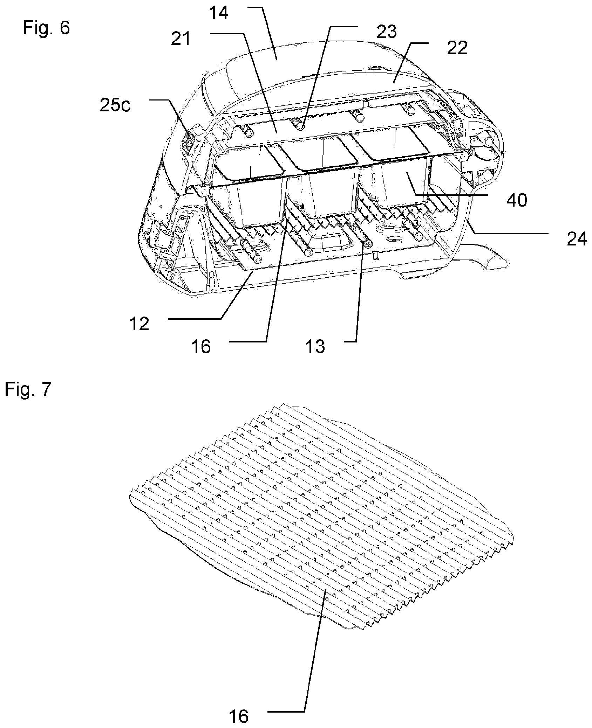

En effet, la figure 4 et la figure 6 représentent une vue de côté en coupe de l'appareil de cuisson pour préparations pâtissières, où l'on voit la cuve interne 21 du couvercle 20 qui est au-dessus et en regard du moule 40, afin de former une enceinte de cuisson fermée.

La figure 4 et le figure 6 montrent aussi un réflecteur 22 et une résistance électrique 23 embarqués sur le couvercle 20, ainsi qu'une résistance électrique 13 et un réflecteur 12 implantés dans l'embase 10. Le réflecteur 22 et le réflecteur 12 sont en regard l'un de l'autre, de sorte à former une enceinte de chauffe qui contient donc les résistances électriques 13 et 23 (formant des moyens de chauffe) et l'enceinte de cuisson formée par la cuve interne 21 et le moule 40. Typiquement, les réflecteurs 12 et 22 sont métalliques, avec au moins leur face interne agencée pour réfléchir un rayonnement de chauffage (paroi brillante, ou polie, ou lisse).

La figure 4 montre aussi une sole de cuisson 16 qui est montée sur un ressort 17 formant des moyens de rappel élastiques et qui repousse la sole de cuisson 16 contre la paroi inférieure du moule 40. En conséquence, la sole de cuisson 16 se trouve entre la résistance électrique 13 et le moule 40, si bien que la chaleur issue de la résistance électrique 13 est diffusée de manière homogène par la sole de cuisson 16 vers le moule 40. La chaleur bien répartie permet de cuire de manière homogène les gâteaux formés dans les empreintes du moule 40. Typiquement, la sole de cuisson 16 est une tôle métallique (aluminium, acier...) éventuellement revêtue, et ondulée ou gaufrée comme le montre la figure 7. La sole de cuisson 16 comprend également une multitude de perforations qui permettent de laisser passer un flux d'air allant de la résistance électrique 13 au moule 40.

Le ressort 17 permet aussi de garantir que le moule 40 est soutenu par la sole de cuisson 16, même si sa hauteur varie. La fonction de soutien limite les déformations du moule 40, et est assurée pour plusieurs hauteurs différentes de moules, qui peuvent donc être interchangés sans perdre la fonction de soutien. Comme la sole de cuisson 16 est ondulée ou gaufrée, le contact entre la sole de cuisson 16 avec le moule 40 se fait selon des lignes de contact, ce qui limite la conduction de chaleur et évite de former des points chauds dans la pâte à cuire.

L'enceinte de chauffe formée par les réflecteurs 12 et 22 est donc un espace fermé qui englobe les moyens de chauffe et l'enceinte de cuisson sans les toucher, si bien que l'espace à chauffer est de faible volume et clos, ce qui limite la quantité d'énergie à fournir, ainsi que les pertes thermiques. De plus, la structure à double paroi (enceinte de cuisson et enceinte de chauffe) permet de chauffer de manière homogène l'espace de cuisson contenu dans l'enceinte de cuisson, ce qui procure des gâteaux cuits de manière homogène et reproductible dans un appareil de cuisson pour préparations pâtissières compact.

On peut aussi remarquer que les résistances électriques 13 et 23 se trouvent plus proches des réflecteurs 12 et 22 respectivement que du moule 40 et de la cuve interne 21 respectivement, toujours pour chauffer de manière homogène avec peu de points chauds l'espace de cuisson.

On peut prévoir par exemple un volume de l'enceinte de chauffe inférieur ou égal à 5.5 litres, et pour un gâteau de 1 kg soit environ 780 mL de pâte avant cuisson, on peut faire la comparaison suivante :

Dans un four de 38 litres il faudrait environ 9,5 minutes de préchauffe pour atteindre 200°C en chaleur tournante puis 50 minutes pour atteindre une bonne cuisson à cœur dans un plat en aluminium soit une dépense énergétique totale de 0.888 kWh.

Dans l'appareil proposé, le plat est déposé à froid dans l'enceinte de cuisson et après 42 minutes on atteint une bonne cuisson à cœur soit une dépense énergétique totale de 0.301 kWh. La cuisson est donc plus rapide et requiert moins d'énergie.

Un ou plusieurs évents 31 (visible sur la figure 5) sont nécessaires pour l'évacuation de la vapeur produite lors de la cuisson. Un gâteau, afin de former une croûte, ou des biscuits afin d'être croustillants, doivent être desséchés en surface. La structure proposée par la présente invention consiste à traverser deux parois (enceinte de cuisson et enceinte de chauffe) pour évacuer cette vapeur d'eau. En effet la vapeur doit être dirigée vers l'extérieur du produit et ne pas risquer de stagner en contact avec des parties sensibles comme les éléments chauffants. De plus, la structure proposée par la présente invention consiste à diriger la vapeur et l'air chauds vers des zones qui ne sont pas utilisées comme préhension par le consommateur, afin de ne pas le brûler.

En particulier, la figure 5 montre un évent 31, sous forme de tube, traverser la cuve interne 21 et le réflecteur 22 du couvercle 20 pour guider vapeur et air chauds vers l'arrière de l'appareil de cuisson pour préparations pâtissières, à bonne distance donc des poignées 25a, 25b, 25c et de l'interface homme machine 15.

De manière avantageuse, on peut donc prévoir que le moule 40 (typiquement un moule souple en silicone par exemple) est amovible, et la cuve interne 21 et/ou le réflecteur 12 de l'embase 10 comprennent des formes d'accostage ou empreintes pour accueillir le moule 40 et le positionner correctement dans l'enceinte de cuisson.

Enfin, il est prévu dans l'embase un palpeur de température qui permet de réguler les résistances électriques 13 et 23 en même temps. La résistance électrique 23 du couvercle 20 est pourvue également d'un limiteur pour éviter une surchauffe du couvercle 20 en cas de charge importante de produit dans le moule 40 de l'embase.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Appareil de cuisson pour préparations pâtissières comprenant une embase (10) et un couvercle (20) articulé sur l'embase (10) entre une première position relevée pour l'introduction d'une préparation pâtissière et une deuxième position abaissée pour former un boitier de cuisson de la préparation pâtissière,
le couvercle (20) et l'embase (10) comprenant chacun une portion du boîtier (14, 24) de cuisson et des moyens de chauffage ancrés sur la portion du boîtier de cuisson respective,
l'appareil de cuisson comprenant des moyens de positionnement et de maintien, agencés pour positionner et maintenir un moule (40) amovible, tel qu'un moule (40) en silicone, dans une enceinte de cuisson formée à l'intérieur du boîtier de cuisson lorsque le couvercle (20) est dans la deuxième position abaissée,
l'embase (10) comprenant :
- une sole de cuisson (16) montée mobile par rapport à la portion de boîtier de cuisson de l'embase (10) pour contacter une paroi inférieure du moule (40) amovible, et agencée entre la paroi inférieure du moule (40) amovible reçu dans l'espace de cuisson et les moyens de chauffage de l'embase (10),
- des moyens de rappel élastiques, agencés pour repousser la sole de cuisson (16) contre la paroi inférieure du moule (40) amovible.

2. Appareil de cuisson pour préparations pâtissières selon la revendication précédente, dans lequel la sole de cuisson (16) comprend une pluralité de protubérances, agencées pour contacter la paroi inférieure du moule (40) amovible selon des lignes ou des points de contact.

3. Appareil de cuisson pour préparations pâtissières selon l'une des revendications précédentes, dans lequel la sole de cuisson (16) comprend une pluralité de perforations.

4. Appareil de cuisson pour préparations pâtissières selon l'une des revendications précédentes, dans lequel la sole de cuisson (16) est une paroi métallique, telle qu'une paroi en aluminium.

5. Appareil de cuisson pour préparations pâtissières selon l'une des revendications précédentes, dans lequel la sole de cuisson (16) est une tôle gaufrée.

6. Appareil de cuisson pour préparations pâtissières selon l'une des revendications précédentes, dans lequel le couvercle (20) comprend une cuve interne agencée entre les moyens de chauffage et l'espace de cuisson.

7. Appareil de cuisson pour préparations pâtissières selon la revendication précédente, dans lequel, dans la deuxième position abaissée, la cuve interne (21) du couvercle (20) et le moule (40) amovible reçu dans l'espace de cuisson forment une enceinte de cuisson.

8. Appareil de cuisson pour préparations pâtissières selon l'une des revendications précédentes, dans lequel le couvercle (20) et l'embase (10) comprennent chacun un réflecteur (12, 22), agencés pour former une enceinte de chauffe entourant les moyens de chauffage et l'espace de cuisson, lorsque le couvercle (20) est dans la deuxième position abaissée.

9. Appareil de cuisson pour préparations pâtissières selon la revendication précédente, dans lequel, dans la deuxième position abaissée, le réflecteur (22) du couvercle (20) et le réflecteur (12) de l'embase (10) forment une enceinte de chauffe fermée.

10. Appareil de cuisson pour préparations pâtissières selon l'une des revendications 8 ou 9 dans leur dépendance à la revendication 6, dans lequel les moyens de chauffage du couvercle (20) sont agencés entre la cuve interne (21) du couvercle (20) et le réflecteur (22) du couvercle (20).

11. Appareil de cuisson pour préparations pâtissières selon l'une des revendications 8 à 10, dans lequel les moyens de chauffage de l'embase (10) sont agencés entre la sole de cuisson (16) et le réflecteur de l'embase (10).

12. Appareil de cuisson pour préparations pâtissières selon l'une des revendications 8 à 11, dans lequel, dans la deuxième position abaissée, l'enceinte de chauffe présente un volume inférieur à 5.5 litres.

13. Appareil de cuisson pour préparations pâtissières selon l'une des revendications précédentes, dans lequel le couvercle (20) et/ou l'embase (10) comprennent chacun des moyens de mesure de température.

14. Appareil de cuisson pour préparations pâtissières selon l'une des revendications précédentes, comprenant des moyens de commande de cuisson agencés pour commander indépendamment la chauffe des moyens de chauffage du couvercle (20) et la chauffe des moyens de chauffage de l'embase (10).

15. Appareil de cuisson pour préparations pâtissières selon l'une des revendications précédentes, dans lequel la portion de boîtier de cuisson (14, 24) du couvercle (20) et de l'embase (10) est formée par au moins un capot plastique.

## Patentansprüche

1. Gargerät für Feinbackwarenzubereitungen, das ein Unterteil (10) und einen Deckel (20) umfasst, der am Unterteil (10) zwischen einer ersten angehobenen Position für die Einführung einer Feinbackzubereitung und einer zweiten abgesenkten Position zur Bildung eines Gehäuses zum Garen der Feinbackwarenzubereitung angelenkt ist,
wobei der Deckel (20) und das Unterteil (10) jeweils einen Abschnitt des Gargehäuses (14, 24) und am jeweiligen Abschnitt des Backgehäuses verankerte Heizmittel umfassen,
wobei das Gargerät Positionier- und Haltemittel umfasst, die zum Positionieren und Halten einer herausnehmbaren Form (40), zum Beispiel einer Silikonform (40), in einem Garraum, der im Innern des Gargehäuses gebildet ist, wenn sich der Deckel (20) in der zweiten, abgesenkten Position befindet, angeordnet sind, wobei das Unterteil (10) Folgendes umfasst:
- einen Garboden (16), der beweglich in Bezug auf den Gargehäuseabschnitt des Unterteils (10) montiert ist, um eine Bodenwand der herausnehmbaren Form (40) zu berühren, und der zwischen der Bodenwand der herausnehmbaren Form (40), die im Garraum aufgenommen ist, und den Heizmitteln des Unterteils (10) angeordnet ist,
- elastische Rückstellmittel, die angeordnet sind, um den Garboden (16) gegen die Bodenwand der herausnehmbaren Form (40) zurückzudrücken.

2. Gargerät für Feinbackwarenzubereitungen nach dem vorstehenden Anspruch, worin der Garboden (16) eine Vielzahl von Vorsprüngen umfasst, die so angeordnet sind, dass sie die Bodenwand der herausnehmbaren Form (40) entlang von Kontaktlinien oder -punkten berühren.

3. Gargerät für Feinbackwarenzubereitungen nach einem der vorstehenden Ansprüche, worin der Garboden (16) eine Vielzahl von Perforationen umfasst.

4. Gargerät für Feinbackwarenzubereitungen nach einem der vorstehenden Ansprüche, worin der Garboden (16) eine Metallwand, zum Beispiel eine Aluminiumwand, ist.

5. Gargerät für Feinbackwarenzubereitungen nach einem der vorstehenden Ansprüche, worin der Garboden (16) ein Waffelblech ist.

6. Gargerät für Feinbackwarenzubereitungen nach einem der vorstehenden Ansprüche, worin der Deckel (20) einen Innenbehälter umfasst, der zwischen den Heizmitteln und dem Garraum angeordnet ist.

7. Gargerät für Feinbackwarenzubereitungen nach dem vorstehenden Anspruch, worin in der zweiten, abgesenkten Position der Innenbehälter (21) des Deckels (20) und die im Garraum aufgenommene herausnehmbare Form (40) eine Garkammer bilden.

8. Gargerät für Feinbackwarenzubereitungen nach einem der vorstehenden Ansprüche, worin der Deckel (20) und das Unterteil (10) jeweils einen Reflektor (12, 22) umfassen, die angeordnet sind, um eine Heizkammer zu bilden, die die Heizmittel und den Garraum umgibt, wenn sich der Deckel (20) in der zweiten, abgesenkten Position befindet.

9. Gargerät für Feinbackwarenzubereitungen nach dem vorstehenden Anspruch, worin in der zweiten abgesenkten Position der Reflektor (22) des Deckels (20) und der Reflektor (12) des Unterteils (10) eine geschlossene Heizkammer bilden.

10. Gargerät für Feinbackwarenzubereitungen nach einem der Ansprüche 8 oder 9 in ihrer Abhängigkeit von Anspruch 6, worin die Heizmittel des Deckels (20) zwischen dem Innenbehälter (21) des Deckels (20) und dem Reflektor (22) des Deckels (20) angeordnet sind.

11. Gargerät für Feinbackwarenzubereitungen nach einem der Ansprüche 8 bis 10, worin die Heizmittel des Unterteils (10) zwischen dem Garboden (16) und dem Reflektor des Unterteils (10) angeordnet sind.

12. Gargerät für Feinbackwarenzubereitungen nach einem der Ansprüche 8 bis 11, worin in der zweiten, abgesenkten Position der Heizraum ein Innenvolumen von 5,5 Liter aufweist.

13. Gargerät für Feinbackwarenzubereitungen nach einem der vorstehenden Ansprüche, worin der Deckel (20) und/oder das Unterteil (10) jeweils Temperaturmessmittel umfassen.

14. Gargerät für Feinbackwarenzubereitungen nach einem der vorstehenden Ansprüche, das Garsteuerungsmittel umfasst, die angeordnet sind, um das Aufheizen der Heizmittel des Deckels (20) und das Aufheizen der Heizmittel des Unterteils (10) unabhängig voneinander zu steuern.

15. Gargerät für Feinbackwarenzubereitungen nach einem der vorstehenden Ansprüche, worin der Abschnitt des Gargehäuses (14, 24) des Deckels (20) und des Unterteils (10) aus zumindest einer Kunststoffhaube gebildet wird.

## Claims

1. Cooking appliance for baking mixes comprising a base (10) and a lid (20) articulated on the base (10) between a first raised position for the introduction of a baking mix and a second lowered position to form a cooking compartment for the baking mix,
the lid (20) and the base (10) each comprising a portion of the cooking compartment (14, 24) and heating means anchored on the portion of the respective cooking compartment,
the cooking appliance comprising positioning and holding means, arranged to position and hold a removable mould (40), such as a silicone mould (40), in a cooking chamber formed inside the cooking compartment when the lid (20) is in the second lowered position, the base (10) comprising:
- a cooking plate (16) movably mounted with respect to the cooking compartment portion of the base (10) to contact a lower wall of the removable mould (40), and arranged between the lower wall of the removable mould (40) received in the cooking space and the heating means of the base (10),
- elastic return means, arranged to push the cooking plate (16) against the lower wall of the removable mould (40).

2. Cooking appliance for baking mixes according to the preceding claim, wherein the cooking plate (16) comprises a plurality of projections, arranged to contact the lower wall of the removable mould (40) along the lines or contact points.

3. Cooking appliance for baking mixes according to one of the preceding claims, wherein the cooking plate (16) comprises a plurality of perforations.

4. Cooking appliance for baking mixes according to one of the preceding claims, wherein the cooking plate (16) is a metal wall, such as an aluminium wall.

5. Cooking appliance for baking mixes according to one of the preceding claims, wherein the cooking plate (16) is an embossed metal sheet.

6. Cooking appliance for baking mixes according to one of the preceding claims, wherein the lid (20) comprises an inner reservoir arranged between the heating means and the cooking space.

7. Cooking appliance for baking mixes according to the preceding claim, wherein, in the second lowered position, the inner reservoir (21) of the lid (20) and the removable mould (40) received in the cooking space form a cooking chamber.

8. Cooking appliance for baking mixes according to one of the preceding claims, wherein the lid (20) and the base (10) each comprise a reflector (12, 22), arranged to form a heating chamber surrounding the heating means and the cooking space, when the lid (20) is in the second lowered position.

9. Cooking appliance for baking mixes according to the preceding claim, wherein, in the second lowered position, the reflector (22) of the lid (20) and the reflector (12) of the base (10) form a closed heating chamber.

10. Cooking appliance for baking mixes according to one of claims 8 or 9 in their dependency to claim 6, wherein the heating means of the lid (20) are arranged between the inner reservoir (21) of the lid (20) and the reflector (22) of the lid (20).

11. Cooking appliance for baking mixes according to one of claims 8 to 10, wherein the heating means of the base (10) are arranged between the cooking plate (16) and the reflector of the base (10).

12. Cooking appliance for baking mixes according to one of claims 8 to 11, wherein, in the second lowered position, the heating chamber has a volume less than 5.5 litres.

13. Cooking appliance for baking mixes according to one of the preceding claims, wherein the lid (20) and/or the base (10) each comprise temperature measuring means.

14. Cooking appliance for baking mixes according to one of the preceding claims, comprising cooking control means arranged to independently control the heating of the heating means of the lid (20) and the heating of the heating means of the base (10).

15. Cooking appliance for baking mixes according to one of the preceding claims, wherein the cooking compartment portion (14, 24) of the lid (20) and of the base (10) is formed by at least one plastic cap.
